# EUROPÄISCHE PATENTSCHRIFT

(11) **EP 3 275 580 B1**
(45) Veröffentlichungstag und Bekanntmachung des Hinweises auf die Patenterteilung: **23.10.2024**
(21) Anmeldenummer: 17001197.7
(22) Anmeldetag: 13.07.2017
(51) Int. Cl.: B23C 1/14, B23C 3/04, B23C 3/34, F16H 55/17, F16H 55/32

(54) **VERFAHREN ZUM AUFRAUEN EINER STIRNSEITENFLÄCHE EINES ROTATIONSSYMMETRISCHEN BAUTEILS**
METHOD FOR ROUGHENING A FRONT SURFACE OF A SYMMETRIC WORKPIECE
PROCÉDÉ DE GRAINAGE D'UNE FACE D'UNE PIÈCE COMPORTANT UNE SYMÉTRIE DE ROTATION

(30) Priorität: 22.07.2016 DE 102016008971
(43) Veröffentlichungstag der Anmeldung: 31.01.2018
(73) Patentinhaber: MAN Truck & Bus SE, 80995 München (DE)
(72) Erfinder: Forster, Baptist, 91284 Neuhaus (DE)
(74) Vertreter: Liebl, Thomas

(56) Entgegenhaltungen:
- EP-A1- 0 501 196
- EP-A1- 2 614 909
- CA-A1- 2 691 680
- DE-A1- 10 154 073
- DE-A1- 19 857 841
- JP-A- 2001 091 718
- US-A1- 2009 097 934
- US-A1- 2011 116 931
- US-A1- 2016 074 946

## Beschreibung

Die Erfindung betrifft ein Verfahren zum Aufrauen einer Stirnseitenfläche eines im Wesentlichen rotationssymmetrischen, Bauteils nach dem Oberbegriff des Anspruchs 1.

Es ist bekannt, eine Kurbelwelle einer Brennkraftmaschine drehmomentübertragend mit einem Zahnrad bzw. mit einem sogenannten Kurbelwellen-Zahnrad zu verbinden, über das beispielsweise Nockenwellen der Brennkraftmaschine angetrieben werden. Zudem ist es auch bekannt, die Kurbelwelle drehmomentübertragend mit einem Schwungradelement, beispielsweise mit einem Zweimassenschwungrad, zu verbinden, um den Betrieb der Brennkraftmaschine zu optimieren. Das üblicherweise als Stirnrad ausgebildete Kurbelwellen-Zahnrad wird zudem häufig, in Axialrichtung gesehen, zwischen der Kurbelwelle und dem Schwungradelement angeordnet. Zudem wird das Kurbelwellen-Zahnrad häufig gehärtet bzw. einsatzgehärtet, um die Widerstandsfähigkeit der Verzahnung zu erhöhen.

Die Verbindung der Kurbelwelle mit dem Kurbelwellen-Zahnrad und dem Schwungradelement wird üblicherweise mittels mehrerer Schrauben realisiert, die jeweils durch korrespondierende Ausnehmungen bzw. Bohrungen in dem Kurbelwellen-Zahnrad und in dem Schwungradelement geführt sind und in ein kurbelwellenseitiges Gewinde greifen, so dass das Schwungradelement und das Kurbelwellen-Zahnrad mit einer definierten Anpresskraft gegeneinander und gegen die Kurbelwelle gepresst sind. Bei diesem Verbund ist dann eine erste Stirnseitenfläche des Kurbelwellen-Zahnrads in flächiger Anlage mit einer Stirnseitenfläche der Kurbelwelle und zweite Stirnseitenfläche des Kurbelwellen-Zahnrads in flächiger Anlage mit einer Stirnseitenfläche des Schwungradelements.

Bei einer derartigen Verbindung der Kurbelwelle mit dem Kurbelwellen-Zahnrad und dem Schwungradelement ist es zudem bekannt, die gehärteten, nach einem Hartdrehprozess sehr glatten Stirnseitenflächen des Kurbelwellen-Zahnrads aufzurauen, um durch eine erhöhte Reibung bzw. Haftung einer Relativbewegung bzw. Relativdrehung des Zahnrads und des Schwungradelements relativ zu der Kurbelwelle entgegenzuwirken. Eine Relativverdrehung des Kurbelwellen-Zahnrads relativ zu der Kurbelwelle kann beispielsweise zu einem Motorschaden führen, wenn mittels des Kurbelwellen-Zahnrads die Nockenwellen der Brennkraftmaschine angetrieben werden. Das Aufrauen der Stirnseitenflächen des Zahnrads wird bisher durch Sandstrahlen realisiert. Dies ist jedoch für die sandstrahlende Person ungesund und gleichzeitig auch aufwendig bzw. kostenintensiv. Zudem kann durch das Sandstrahlen nur eine geringe Reproduzierbarkeit bezüglich einer gewünschten bzw. optimalen Aufrauhung des Kurbelwellen-Zahnrads erreicht werden.

Aus der CA 2 691 680 A1 ist ein Verfahren gemäß dem Oberbegriff des Anspruchs 1 zum Aufrauen einer Stirnseitenfläche einer Bremsscheibe bekannt.

Die DE 101 54 073 A1 beschreibt eine raue Oberfläche, die in einem Berührungsbereich zwischen einer Druckplatte und einem Zahnrad angeordnet ist.

Aufgabe der Erfindung ist es, ein Verfahren zum Aufrauen einer Stirnseitenfläche eines im Wesentlichen rotationssymmetrischen Bauteils bereitzustellen, mittels denen die Stirnseitenfläche des Bauteils einfach, effektiv und reproduzierbar definiert aufgeraut werden kann. Diese Aufgabe wird gelöst mit den Merkmalen des unabhängigen Patentanspruchs 1. Bevorzugte Weiterbildungen sind in den Unteransprüchen offenbart.

Gemäß Patentanspruch 1 wird ein Verfahren zum Aufrauen einer gehärteten Stirnseitenfläche eines im Wesentlichen rotationssymmetrischen, als Zahnrad ausgebildeten Bauteils vorgeschlagen, wobei eine erste Halte- und Antriebseinrichtung vorgesehen ist, mittels der das Bauteil um seine zentrale Bauteil-Symmetrieachse drehbar gehaltert und mit einer definierten Drehzahl drehangetrieben wird, wobei eine zweite Halte- und Antriebseinrichtung vorgesehen ist, mittels der ein Schneidwerkzeug um eine Werkzeug-Drehachse drehbar gehaltert und mit einer definierten Drehzahl drehangetrieben wird, wobei das Schneidwerkzeug derart relativ zu dem Bauteil angeordnet wird, dass die Werkzeug-Drehachse und die Bauteil-Symmetrieachse im Wesentlichen parallel zueinander angeordnet sind, insbesondere mit einem definierten Abstand voneinander beabstandet sind, und mittels des drehangetriebenen Schneidwerkzeugs eine Aufraustruktur in einem die aufzurauende Stirnseitenfläche bildenden, insbesondere radial äußeren oder exzentrischen, Wandbereich des ebenfalls drehangetriebenen Bauteils eingeschnitten und/oder eingefräst wird.

Auf diese Weise kann die Stirnseitenfläche des Bauteils, beispielsweise im Vergleich zum Sandstrahlen, Erodieren oder Nageln, besonders einfach und effektiv definiert aufgeraut werden, da nun mittels eines Schneidwerkzeugs eine definierte Aufraustruktur in das aufzurauende Bauteil eingeschnitten bzw. eingefräst wird. Dadurch wird auch die Reproduzierbarkeit der Bauteil-Aufrauhung bzw. einer optimierten Aufraustruktur deutlich erhöht.

Das rotationssymmetrische Bauteil muss hier dabei nicht zwingend vollständig rotationssymmetrisch ausgebildet sein, sondern es können auch Teile bzw. Teilbereiche des Bauteils nicht rotationssymmetrisch sein. Beispielsweise muss bei dem als Zahnrad ausgebildeten Bauteil die Verzahnung nicht rotationssymmetrisch ausgebildet sein oder es können auch einzelne exzentrisch angeordnete, in Axialrichtung verlaufende Ausnehmungen bzw. Bohrungen an dem Bauteil vorgesehen sein.

In einer bevorzugten Ausgestaltung des erfindungsgemäßen Verfahrens ist das Verhältnis zwischen der Drehzahl [U/min] des Schneidwerkzeugs und der Umfangsgeschwindigkeit [mm/min] des rotationssymmetrischen Bauteils an einem Radialbereich des Bauteils, an dem die Drehachse des Schneidwerkzeugs das Bauteil schneidet, größer als eins, vorzugsweise größer als zwei, um das Bauteil mit einer optimierten Aufraustruktur versehen zu können.

Weiter bevorzugt wird beim Aufrauen des Bauteils das Schneidwerkzeug in eine erste Drehrichtung gedreht, während das Bauteil in eine zu der ersten Drehrichtung entgegengesetzte zweite Drehrichtung gedreht wird, um die gewünschte Aufraustruktur an dem Bauteil vorzusehen.

Vorzugsweise wird die Aufraustruktur mittels des Schneidwerkzeugs nur für eine einzige vollständige Umdrehung des Bauteils in das Bauteil eingefräst bzw. eingeschnitten, um die gewünschte optimierte Aufraustruktur zu erhalten.

In einer bevorzugten konkreten Ausgestaltung ist ein Radius des Schneidwerkzeugs, insbesondere ein Abstand zwischen der wenigstens einen Schneidkante des Schneidwerkzeugs und der Werkzeug-Drehachse, um ein Vielfaches größer, insbesondere mehr als dreimal so groß, wie der äußere Radius der aufzurauenden Stirnseitenfläche. Dadurch wird die Aufraustruktur des aufzurauenden Bauteils weiter optimiert.

Weiter bevorzugt ist ein Abstand zwischen der Bauteil-Symmetrieachse und der parallel zu der Bauteil-Symmetrieachse angeordneten Werkzeug-Drehachse geringer als der äußere Radius der aufzurauenden Stirnseitenfläche des als Zahnrad ausgebildeten Bauteils. Vorzugsweise ist zudem die parallel zu der Bauteil-Symmetrieachse angeordnete Werkzeug-Drehachse in einem definierten Nahbereich im Bereich eines radial äußeren Stirnseitenflächen-Rands des als Zahnrad ausgebildeten Bauteils angeordnet.

In einer weiteren bevorzugten Ausgestaltung ist der äußere Radius der aufzurauenden Stirnseitenfläche um ein Vielfaches größer, insbesondere mehr als fünfmal so groß, wie ein Abstand zwischen der Werkzeug-Drehachse und einem radial äußeren Stirnseitenflächen-Rand des als Zahnrad ausgebildeten Bauteils, um die Aufraustruktur des Bauteils weiter zu optimieren.

Zweckmäßig kann die Aufraustruktur mit einer definierten Schnitttiefe mittels des Schneidwerkzeugs in den Bauteil-Wandbereich eingeschnitten werden. Bevorzugt ist dabei vorgesehen, dass die Schnitttiefe in einem Bereich von 0,02mm bis 0,05mm liegt.

In einer bevorzugten konkreten Ausgestaltung liegt die Rautiefe der aufgerauten Stirnseitenfläche in einem Bereich von 22 µm bis 28 µm, besonders bevorzugt bei etwa 25 µm. Auf diese Weise wird die Aufrauung des Bauteils weiter optimiert.

Vorzugsweise weist die Aufraustruktur, in Draufsicht auf die Stirnseitenfläche gesehen, bogenförmige und/oder spiralförmige Schneidlinien auf, die sich ausgehend von einem radial inneren Stirnseitenflächen-Rand zu einem radial äußeren Stirnseitenflächen-Rand erstrecken. Bevorzugt ist dabei vorgesehen, dass sich ein erster Teil der Schneidlinien ausgehend von dem radial inneren Stirnseitenflächen-Rand rechtsgekrümmt hin zu dem radial äußeren Stirnseitenflächen-Rand verläuft und ein zweiter Teil der Schneidlinien ausgehend von dem radial inneren Stirnseitenflächen-Rand linksgekrümmt hin zu dem radial äußeren Stirnseitenflächen-Rand verläuft. So ist die Aufraustruktur des Bauteils.

Vorzugsweise sind die Schneidlinien des ersten und/oder zweiten Schneidlinienteils, insbesondere am radial inneren Stirnseitenflächen-Rand, in Umfangsrichtung mit einem definierten Abstand voneinander beabstandet. Weiter bevorzugt sind die Schneidlinien des ersten Schneidlinien-Teils und des zweiten Schneidlinien-Teils, insbesondere am radial inneren Stirnseitenflächen-Rand in Umfangsrichtung alternierend bzw. abwechselnd angeordnet.

In einer bevorzugten konkreten Ausgestaltung ist das Zahnrad durch ein Stirnrad gebildet. Bevorzugt ist dabei vorgesehen, dass das Zahnrad mehrere in Umfangsrichtung, insbesondere gleichmäßig, verteilte, axial durchgängige Ausnehmungen, insbesondere Bohrungen, aufweist, die in der wenigstens einen aufzurauenden Stirnseitenfläche des Zahnrads münden. Alternativ kann das Bauteil beispielsweise auch durch eine Kurbelwelle oder durch ein Schwungradelement gebildet sein.

Weiter bevorzugt weist das Schneidwerkzeug ein, insbesondere drehantreibbares, Halteelement, insbesondere einen Drehkopf, auf, an dem wenigstens ein Schneidelement, insbesondere lösbar, gehaltert ist. Bevorzugt ist dabei vorgesehen, dass das Schneidelement durch eine Schneidplatte, insbesondere durch eine Wendeschneidplatte, gebildet ist, um das Schneidelement einfach und effektiv auszubilden.

Das mit dem erfindungsgemäßen Verfahren hergestellte Zahnrad, insbesondere ein Stirnrad, hat eine gehärtete Stirnseitenfläche, wobei in einem die Stirnseitenfläche bildenden, insbesondere radial äußeren und/oder exzentrischen, Wandbereich des Zahnrads eine definierte Aufraustruktur eingeschnitten und/oder eingefräst ist. Bevorzugt ist dabei vorgesehen, dass das Zahnrad eine erste Stirnseitenfläche und eine axial zu der ersten Stirnseitenfläche gegenüberliegende zweite Stirnseitenfläche aufweist, wobei in die Stirnseitenflächen bildenden, insbesondere radial äußeren und/oder exzentrischen, Wandbereichen des Zahnrads eine definierte Aufraustruktur eingeschnitten und/oder eingefräst ist.

Das mit dem erfindungsgemäßen Verfahren hergestellte Zahnrad kann Teil einer Antriebseinrichtung sein. Bevorzugt ist dabei vorgesehen, dass die Antriebseinrichtung eine, eine Kurbelwelle aufweisende Brennkraftmaschine aufweist, wobei die Kurbelwelle an einem Endbereich mittels wenigstens eines Befestigungsmittels, insbesondere mittels wenigstens einer Schraube, drehmomentübertragend mit dem Zahnrad und einem Schwungradelement verbunden ist, wobei das Zahnrad, in Axialrichtung gesehen, zwischen der Kurbelwelle und dem Schwungradelement angeordnet ist, wobei eine erste Stirnseitenfläche des Zahnrads in flächiger Anlage mit einer kurbelwellenseitigen Stirnseitenfläche ist und mittels des wenigstens einen Befestigungsmittels gegen die kurbelwellenseitige Stirnseitenfläche gepresst ist, und wobei eine zweite Stirnseitenfläche des Zahnrads in flächiger Anlage mit einer Stirnseitenfläche des Schwungradelements ist und mittels des wenigstens einen Befestigungsmittels gegen die Stirnseitenfläche des Schwungradelements gepresst ist.

Die vorgenannte Antriebseinrichtung mit dem mittels des erfindungsgemäßen Verfahren hergestellte Zahnrad kann Teil eines Fahrzeugs, insbesondere eines Nutzfahrzeugs, sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer perspektivischen Explosionsdarstellung einen Teil einer Antriebseinrichtung mit einem Zahnrad, das mit dem erfindungsgemäßen Verfahren hergestellt ist;
- Figur 2: in einer Schnittdarstellung den Teil der Antriebseinrichtung;
- Figur 3: eine schematische Darstellung, aus der der Aufbau der Vorrichtung hervorgeht;
- Figur 4: in einer schematischen Darstellung von oben, eine Aufraustruktur eines aufgerauten Zahnrads der Antriebseinrichtung; und
- Figur 5: ein Diagramm, in das eine Messergebnis zur Rautiefe des aufgerauten Zahnrads eingetragen ist.

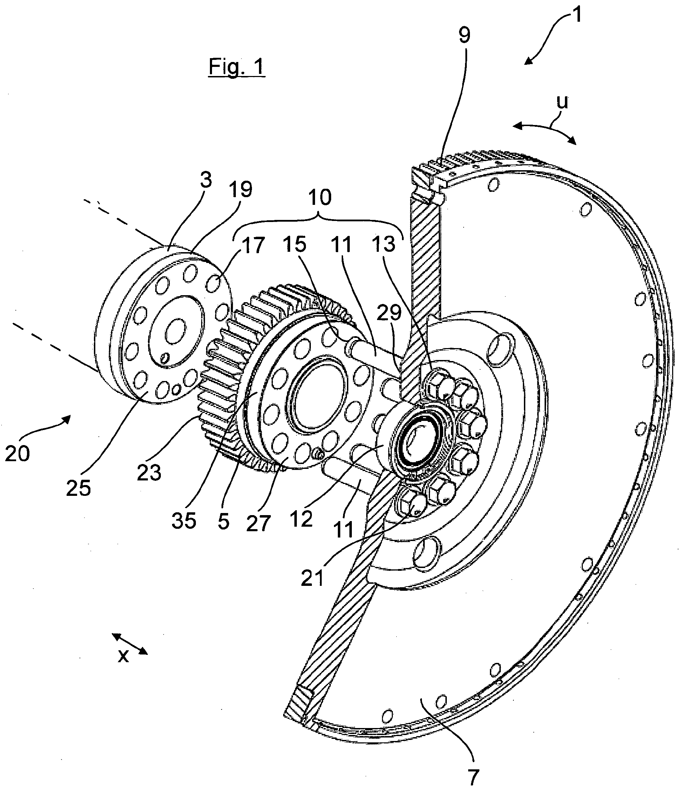

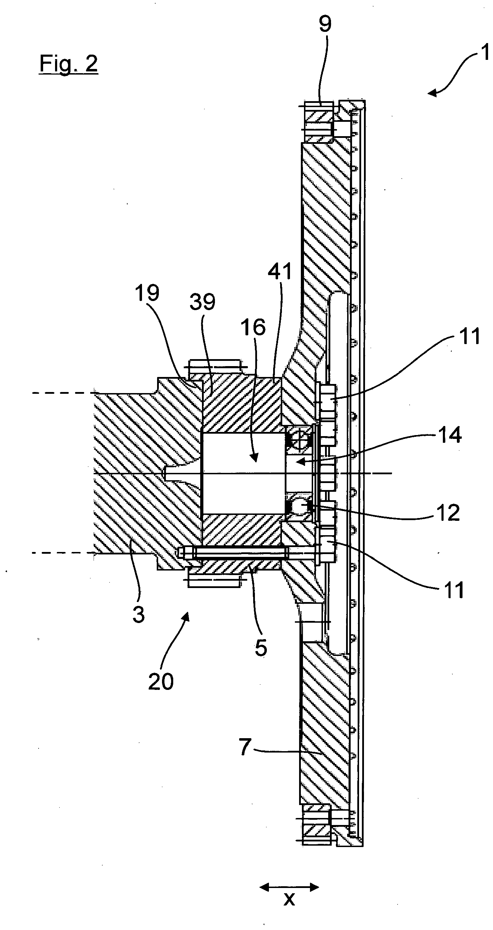

In Figur 1 ist ein Teil einer Antriebseinrichtung 1, insbesondere für ein Fahrzeug, in Explosionsdarstellung gezeigt. Die Antriebseinrichtung 1 weist eine Brennkraftmaschine mit einer in Figur 1 teilweise gezeigten Kurbelwelle 3, ein mit der Kurbelwelle 3 drehmomentübertragend verbindbares Kurbelwellen-Zahnrad 5 sowie ein ebenfalls mit der Kurbelwelle 3 drehmomentübertragend verbindbares Schwungradelement 7 auf. Das Kurbelwellen-Zahnrad 5 ist hier dabei, in Axialrichtung x gesehen, zwischen der Kurbelwelle 3 und dem Schwungradelement 7 angeordnet. Über das Kurbelwellen-Zahnrad 5 werden hier beispielhaft in den Figuren nicht gezeigte Nockenwellen der Brennkraftmaschine angetrieben. Mittels des Schwungradelements 7 wird der Betrieb der Brennkraftmaschine optimiert. Zudem weist das Schwungradelement 7 hier beispielhaft auch eine Außenverzahnung 9 auf, über die ein Anlasser der Brennkraftmaschine angetrieben wird. Des Weiteren weist die Antriebseinrichtung 1 hier auch ein Wälzlager 12 auf, das im in Fig. 2 gezeigten verbundenen Zustand der Antriebseinrichtung 1 in einer zentralen Ausnehmung bzw. Bohrung 14 des Schwungradelements 7 angeordnet und formschlüssig festgelegt ist. Mittels des Wälzlagers 12 wird eine in den Figuren nicht gezeigte getriebeseitige Welle der Antriebseinrichtung drehbar gelagert, die im verbundenen Zustand der Antriebseinrichtung 1 mit einem Endbereich in eine zentrale, axial durchgängige Ausnehmung 16 des Zahnrads 5 einragt.

Wie aus Figur 1 und Figur 2 weiter hervorgeht, werden das Kurbelwellen-Zahnrad 5 und das Schwungradelement 7 hier beispielhaft mittels mehrerer Schraubverbindungen 10 mit der Kurbelwelle 3 verbunden. Jede Schraube 11 wird hier dabei durch eine axial durchgehende Ausnehmung 13 in dem Schwungradelement 7 und durch eine ebenfalls axial durchgängige Ausnehmung 15 in dem Kurbelwellen-Zahnrad 5 geführt und in eine Gewindebohrung 17 in einem Stirnseiten-Wandbereich 19 der Kurbelwelle 3 eingeschraubt. Mittels der Schrauben 11 bzw. mittels der an dem Schwungradelement 7 anliegenden Schraubenköpfe 21 werden das Schwungradelement 7 und das Kurbelwellen-Zahnrad 5 im verbundenen Zustand der Antriebseinrichtung dann mit einer definierten Anpresskraft gegen die Kurbelwelle 3 gepresst. Dabei ist hier dann eine erste plane Stirnseitenfläche 23 (Figur 2) des Kurbelwellen-Zahnrads 5 in flächiger Anlage mit einer hier ebenfalls planen Stirnseitenfläche 25 der Kurbelwelle 3. Zudem ist hier auch eine zweite Stirnseitenfläche 27 des Kurbelwellen-Zahnrads 5 in flächiger Anlage mit einer hier ebenfalls planen Stirnseitenfläche 29 des Schwungradelements 7. Die erste Stirnseitenfläche 23 des Zahnrads erstreckt sich hier dabei in Radialrichtung ausgehend von der zentralen Ausnehmung 16 des Zahnrads 5 bis zu einem axial abragenden Bereich der Außenverzahnung des Zahnrads 5. Die zweite Stirnseitenfläche 27 des Zahnrads 5 erstreckt sich in Radialrichtung ausgehend von einem radial inneren, axial abragenden ringförmigen Fortsatz bis zu einem radial äußeren Rand des Zahnrads 5

Des Weiteren sind die mehreren Schraubverbindungen 10 hier, in Umfangsrichtung u gesehen, gleichmäßig über die Komponenten 3, 5, 7 verteilt angeordnet. Zudem sind die Gewindebohrungen 17 hier an einem radial äußeren Randbereich des Kurbelwellen-Endbereichs 20 angeordnet. Die Ausnehmungen 13 des Kurbelwellen-Zahnrads 5 sind hier beispielhaft an einem radial äußeren Randbereich eines axialen Fortsatzes 35 des Kurbelwellen-Zahnrads 5 angeordnet, der keine Verzahnung aufweist. Der axiale Fortsatz 35 ist hier beispielhaft mit Ausnahme der Ausnehmungen 13 rotationssymmetrisch ausgebildet. Die Ausnehmungen 15 des Schwungradelements 7 sind hier beispielhaft an einem radial inneren Randbereich 37 des Schwungradelements 7 angeordnet. Des Weiteren münden die Gewindebohrungen 17 der Kurbelwelle, die Ausnehmungen 15 des Kurbelwellen-Zahnrads 5 und die Ausnehmungen 13 des Schwungradelements 7 hier in den genannten Stirnseitenflächen 23, 25, 27, 29 der jeweiligen Komponente 3, 5, 7.

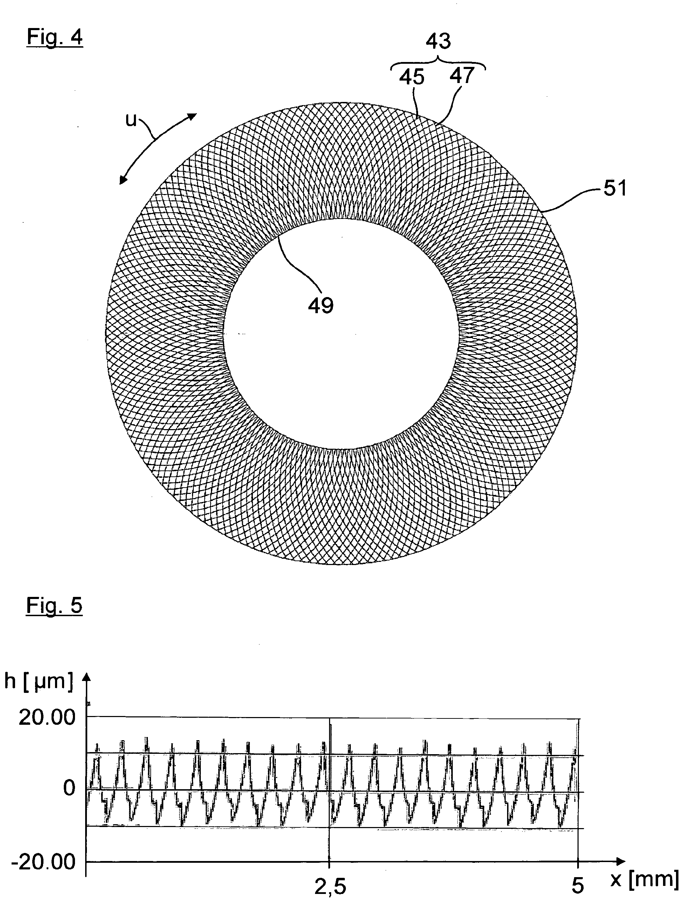

Um einer Relativverdrehung des Kurbelwellen-Zahnrads 5 und des Schwungradelements 7 relativ zu der Kurbelwelle 3 entgegenzuwirken, ist in die Stirnseitenflächen 23, 27 des Kurbelwellen-Zahnrads 5 bildende gehärtete Wandbereiche 39, 41 (Figur 2) eine definierte Aufraustruktur 43 (Figur 4) eingeschnitten bzw. eingefräst. In Fig. 4 ist die Aufraustruktur 43 schematisch gezeigt. Die Aufraustruktur 43 weist hier beispielhaft, in Draufsicht auf die jeweilige Stirnseitenfläche 23, 27 gesehen, bogenförmige sowie leicht spiralförmige Schneidlinien 45, 47 auf, die sich ausgehend von einem radial inneren Stirnseitenflächen-Rand 49 hin zu einem radial äußeren Stirnseitenflächen-Rand 51 erstrecken. Ein erster Teil der Schneidlinien bzw. die Schneidlinien 45 verlaufen hier dabei ausgehend von dem radial inneren Stirnseitenflächen-Rand 49 rechtsgekrümmt hin zu dem radial äußeren Stirnseitenflächen-Rand 51. Ein zweiter Teil der Schneidlinien bzw. die Schneidlinien 47 verlaufen hier beispielhaft ausgehend von dem radial inneren Stirnseitenflächen-Rand 49 linksgekrümmt hin zu dem radial äußeren Stirnseitenflächen-Rand 51. Zudem sind die Schneidlinien 47, 49 hier am radial inneren Stirnseitenflächen-Rand 49 mit einem definierten Abstand voneinander beabstandet angeordnet. Des Weiteren sind die Schneidlinien 47 und die Schneidlinien 49 hier am radial inneren Stirnseitenflächen-Rand 49 in Umfangsrichtung u alternierend bzw. sich abwechselnd angeordnet.

In Figur 5 ist ein Diagramm gezeigt, in das die gemessene Rauheit der Stirnseitenflächen 23, 27 bzw. der die Stirnseitenflächen 23, 27 bildenden Wandbereiche 39, 41 eingetragen ist. Gemäß diesem Messergebnis beträgt eine Rautiefe Rz der Stirnseitenflächen 23, 27 des Kurbelwellen-Zahnrads 5 hier beispielhaft etwa 23,5 µm. Mit einer Rauheit, wie sie beispielsweise aus dem in Figur 5 gezeigten Messergebnis hervorgeht, kann eine Relativverdrehung des Kurbelwellen-Zahnrads und des Schwungradelements 7 relativ zu der Kurbelwelle 3 besonders effektiv verhindert werden.

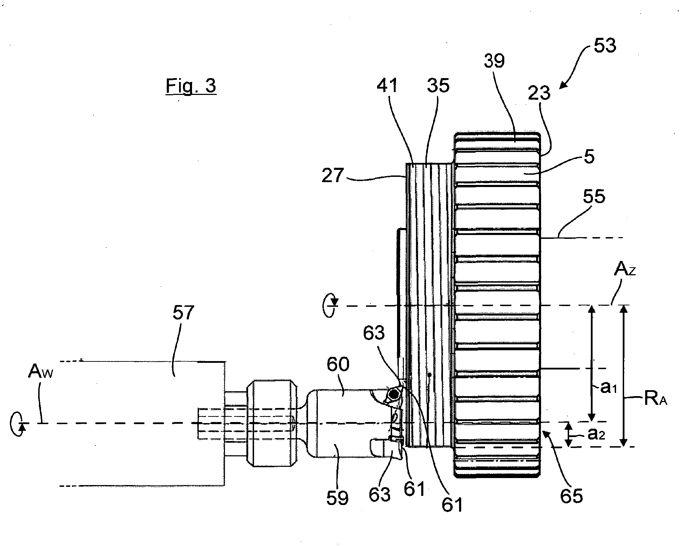

In Figur 3 ist schematisch eine Vorrichtung 53 gezeigt, mittels der die Stirnseitenflächen 23, 27 des Kurbelwellen-Zahnrads 5 aufgeraut bzw. mittels der die Stirnseitenflächen 23, 27 des Kurbelwellen-Zahnrads 5 mit der Aufraustruktur 43 versehen werden. Die Vorrichtung 53 weist eine erste Halte- und Antriebseinrichtung 55 auf, mittels der das Kurbelwellen-Zahnrad 5 um eine Zahnrad-Drehachse Az axial drehbar gehaltert und mit einer definierten Drehzahl drehangetrieben werden kann. Die Zahnrad-Drehachse Az ist hier beispielhaft durch die zentrale Zahnrad-Symmetrieachse gebildet. Zudem weist die Vorrichtung 53 auch eine zweite Halte- und Antriebseinrichtung 57 auf, mittels der ein Schneidwerkzeug 59 um eine Werkzeug-Drehachse Aw axial drehbar gehaltert und mit einer definierten Drehzahl angetrieben werden kann. Das Schneidwerkzeug 59 weist hier beispielhaft ein im Wesentlichen rotationssymmetrisches Halteelement bzw. einen Drehkopf 60 auf, das mit einem Endbereich bzw. mit einem Schaftbereich lösbar mit der zweiten Halte- und Antriebseinrichtung 57 verbunden ist, so dass es um seine zentrale Symmetrieachse drehbar ist. An seinem anderem Endbereich weist das Schneidwerkzeug 59 mehrere, hier beispielhaft drei, lösbar festgelegte Schneidelemente 63 auf. Die Schneidelemente 63 sind hier beispielhaft durch Wendeschneidplatten gebildet und in Umfangsrichtung gleichmäßig über den Drehkopf 60 verteilt angeordnet. Zudem ragen die Schneidelemente 63 mit ihrer jeweiligen Schneidkante 61 axial nach vorne von dem Drehkopf 60 ab.

Zum Aufrauen der Stirnseitenfläche 23 des Kurbelwellen-Zahnrads 5 wird das Schneidwerkzeug 59 derart relativ zu dem Zahnrad 5 angeordnet, dass die Werkzeug-Drehachse Aw und die Zahnrad-Drehachse Az parallel zueinander angeordnet und mit einem definierten radialen Abstand a₁ voneinander beabstandet sind. Das drehangetriebene Schneidwerkzeug 59 wird dann axial nach vorne in Richtung des aufzurauenden, ebenfalls drehangetriebenen Zahnrads 5 bewegt, bis das Schneidwerkzeug 59 mit einer definierten Schnitttiefe in die Stirnseitenfläche 27 des Zahnrads 5 einschneidet. Durch den Drehantrieb des Schneidwerkzeugs 59 und des Zahnrads 5 wird dann die Aufraustruktur 43 in den die Stirnseitenfläche 23 bildenden exzentrischen Wandbereich 39 des Zahnrads 5 eingeschnitten bzw. eingefräst. Nach einer vollständigen Umdrehung des Zahnrads 5 wird das Schneidwerkzeug dann wieder axial nach hinten von dem Zahnrad 5 wegverlagert, so dass die Aufraustruktur 43 nur für eine einzige Umdrehung des Zahnrads 5 mittels des Schneidwerkzeugs 59 in das Zahnrad 5 eingeschnitten wird. Die Schnitttiefe beträgt dabei vorzugsweise 0,02mm bis 0,05mm.

Die Drehzahl des Schneidwerkzeugs 59 liegt hier beispielhaft bei etwa 1300U/min. Die Vorschubgeschwindigkeit des Zahnrads 5 bzw. die Umfangsgeschwindigkeit des Zahnrads 5 an einem Radialbereich 65 des Zahnrads 5, an dem die Drehachse Aw des Schneidwerkzeugs 59 das Zahnrad 5 schneidet, liegt hier bei etwa 580mm/min. Somit ist das Verhältnis zwischen der Drehzahl des Schneidwerkzeugs 59 und der Umfangsgeschwindigkeit des Zahnrads 5 an dem Radialbereich 65 hier größer zwei. Zudem drehen sich das Zahnrad 5 und das Schneidwerkzeug 59 hier zueinander gegenläufig bzw. entgegengesetzt.

Des Weiteren ist ein Radius des Schneidwerkzeugs 59 bzw. ein Abstand zwischen den Schneidkanten 61 des Schneidwerkzeugs 59 und der Werkzeug-Drehachse Aw hier mehr als dreimal so groß wie ein äußerer Radius R_{A} der aufzurauenden Stirnseitenfläche 23. Des Weiteren ist hier auch der Abstand a₁ zwischen der Bauteil-Drehachse A_{B} und der Werkzeug-Drehachse Aw geringer als der äußere Radius R_{A} der aufzurauenden Stirnseitenfläche 23. Zudem ist die Werkzeug-Drehachse Aw hier in einem definierten Nahbereich im Bereich des äußeren Stirnseitenflächen-Rands 51 angeordnet. Konkret ist hier dabei der äußere Radius R_{A} der aufzurauenden Stirnseitenfläche 23 mehr als fünfmal so groß wie ein Abstand a₂ zwischen der Werkzeug-Drehachse A_{W} und dem radial äußeren Stirnseitenflächen-Rand 51.

### Bezugszeichenliste

- 1: Antriebseinrichtung
- 3: Kurbelwelle
- 5: Kurbelwellen-Zahnrad
- 7: Schwungradelement
- 9: Außenverzahnung
- 10: Schraubverbindung
- 11: Schraube
- 12: Wälzlager
- 13: Ausnehmung
- 14: Ausnehmung
- 15: Ausnehmung
- 16: Ausnehmung
- 17: Gewindebohrung
- 19: Stirnseiten-Wandbereich
- 20: Kurbelwellen-Endbereich
- 21: Schraubenkopf
- 23: erste zahnradseitige Stirnseitenfläche
- 25: kurbelwellenseitige Stirnseitenfläche
- 27: zweite zahnradseitige Stirnseitenfläche
- 29: schwungradelementseitige Stirnseitenfläche
- 35: axialer Fortsatz
- 39: Wandbereich
- 41: Wandbereich
- 43: Aufraustruktur
- 45: Schneidlinie
- 47: Schneidlinie
- 49: innerer Stirnseitenflächen-Rand
- 51: äußerer Stirnseitenflächen-Rand
- 53: Vorrichtung
- 55: erste Halte- und Antriebseinrichtung
- 57: zweite Halte- und Antriebseinrichtung
- 59: Schneidwerkzeug
- 60: Halteelement
- 61: Schneidkante
- 63: Schneidelement
- 65: Radialbereich
- a₁: Abstand
- a₂: Abstand
- Aw: Werkzeug-Drehachse
- A_{z}: Zahnrad-Drehachse
- R_{A}: äußerer Radius

## Patentansprüche

1. Verfahren zum Aufrauen einer Stirnseitenfläche eines im Wesentlichen rotationssymmetrischen Bauteils,
wobei eine erste Halte- und Antriebseinrichtung (55) vorgesehen ist, mittels der das Bauteil (5) um seine zentrale Bauteil-Symmetrieachse (A_{Z}) drehbar gehaltert und mit einer definierten Drehzahl drehangetrieben wird,
wobei eine zweite Halte- und Antriebseinrichtung (57) vorgesehen ist, mittels der ein Schneidwerkzeug (59) um eine Werkzeug-Drehachse (A_{W}) drehbar gehaltert und mit einer definierten Drehzahl drehangetrieben wird,
wobei das Schneidwerkzeug (59) derart relativ zu dem Bauteil (5) angeordnet wird, dass die Werkzeug-Drehachse (A_{W}) und die Bauteil-Symmetrieachse (A_{Z}) im Wesentlichen parallel zueinander angeordnet sind und mittels des drehangetriebenen Schneidwerkzeugs (59) eine Aufraustruktur (43) in einen die aufzurauende Stirnseitenfläche (23, 27) bildenden Wandbereich (39, 41) des ebenfalls drehangetriebenen Bauteils (5) eingeschnitten und/oder eingefräst wird,
**dadurch gekennzeichnet,**
**dass** die Stirnseitenfläche eine gehärtete Stirnseitenfläche ist und dass das Bauteil (5) ein Zahnrad ist.

2. Verfahren nach Anspruch 1, **dadurch gekennzeichnet, dass** das Verhältnis zwischen der Drehzahl [U/min] des Schneidwerkzeugs (59) und der Umfangsgeschwindigkeit [mm/min] des rotationssymmetrischen Bauteils (5) an einem Radialbereich (65) des Bauteils (5), an dem die Drehachse (A_{W}) des Schneidwerkzeugs (59) das Bauteil (5) schneidet, größer als eins ist, vorzugsweise größer als zwei ist.

3. Verfahren nach Anspruch 1 oder 2, **dadurch gekennzeichnet, dass** das Schneidwerkzeug (59) in eine erste Drehrichtung gedreht wird, während das Bauteil (5) in eine zu der ersten Drehrichtung entgegengesetzte zweite Drehrichtung gedreht wird.

4. Verfahren nach einem der vorhergehenden Ansprüche, **dadurch gekennzeichnet, dass** die Aufraustruktur (43) im Wesentlichen für eine einzige Umdrehung des Bauteils (5) mittels des Schneidwerkzeugs (59) eingeschnitten und/oder eingefräst wird.

5. Verfahren nach einem der vorhergehenden Ansprüche, **dadurch gekennzeichnet, dass** ein Radius des Schneidwerkzeugs (59), insbesondere ein Abstand zwischen der wenigstens einen Schneidkante (61) des Schneidwerkzeugs (59) und der Werkzeug-Drehachse (Aw), um ein Vielfaches größer ist, insbesondere mehr als dreimal so groß ist, wie der äußere Radius (R_{A}) der aufzurauenden Stirnseitenfläche (23, 27).

6. Verfahren nach einem der vorhergehenden Ansprüche, **dadurch gekennzeichnet, dass** die Aufraustruktur (43) mit einer definierten Schnitttiefe mittels des Schneidwerkzeugs in den Bauteil-Wandbereich (39, 41) eingeschnitten wird, wobei bevorzugt vorgesehen ist, dass die Schnitttiefe in einem Bereich von 0,02mm bis 0,05mm liegt.

7. Verfahren nach einem der vorhergehenden Ansprüche, **dadurch gekennzeichnet, dass** die Rauhtiefe der aufgerauten Stirnseitenfläche (23, 27) in einem Bereich von 22µm bis 28µm, insbesondere bei etwa 25µm, liegt.

8. Verfahren nach einem der vorhergehenden Ansprüche, **dadurch gekennzeichnet, dass** die Aufraustruktur (43), in Draufsicht auf die Stirnseitenfläche (23, 27) gesehen, bogenförmige und/oder spiralförmige Schneidlinien (45, 47) aufweist, die sich ausgehend von einem radial inneren Stirnseitenflächen-Rand (49) zu einem radial äußeren Stirnseitenflächen-Rand (51) erstrecken, wobei bevorzugt vorgesehen ist, dass sich ein erster Teil der Schneidlinien (45) ausgehend von dem radial inneren Stirnseitenflächen-Rand (49) rechtsgekrümmt hin zu dem radial äußeren Stirnseitenflächen-Rand (51) verläuft und ein zweiter Teil der Schneidlinien (47) ausgehend von dem radial inneren Stirnseitenflächen-Rand (49) linksgekrümmt hin zu dem radial äußeren Stirnseitenflächen-Rand (51) verläuft.

9. Verfahren nach Anspruch 7, **dadurch gekennzeichnet, dass** die Schneidlinien des ersten und/oder des zweiten Schneidlinien-Teils, insbesondere am radial inneren Stirnseitenflächen-Rand (49), in Umfangsrichtung mit einem definierten Abstand voneinander beabstandet sind, und/oder die Schneidlinien des ersten Schneidlinien-Teils (45) und des zweiten Schneidlinien-Teils (47), insbesondere am radial inneren Stirnseitenflächen-Rand (49), in Umfangsrichtung alternierend angeordnet sind.

10. Verfahren nach einem der vorhergehenden Ansprüche, **dadurch gekennzeichnet, dass** das Zahnrad (5) durch ein Stirnrad gebildet ist, und/oder dass das Zahnrad (5) mehrere in Umfangsrichtung verteilte, axial durchgängige Ausnehmungen (15), insbesondere Bohrungen, aufweist, die in der wenigstens einen aufzurauenden Stirnseitenfläche (23, 27) des Zahnrads (5) münden.

11. Verfahren nach einem der vorhergehenden Ansprüche, **dadurch gekennzeichnet, dass** das Schneidwerkzeug (59) ein Haltelement (60), insbesondere einen Drehkopf, aufweist, an dem wenigstens ein Schneidelement (63), insbesondere lösbar, gehaltert ist, wobei bevorzugt vorgesehen ist, dass das Schneidelement (63) durch eine Schneidplatte, insbesondere durch eine Wendeschneidplatte, gebildet ist.

## Claims

1. Method for roughening an end surface of a substantially rotationally symmetrical component, wherein provision is made of a first holding and drive device (55), by means of which the component (5) is retained so as to be rotatable, and rotationally driven at a defined rotational speed, about its central component axis of symmetry (Az), wherein provision is made of a second holding and drive device (57), by means of which a cutting tool (59) is retained so as to be rotatable, and rotationally driven at a defined rotational speed, about a tool axis of rotation (Aw), wherein the cutting tool (59) is arranged relative to the component (5) in such a way that the tool axis of rotation (A_{W}) and the component axis of symmetry (A_{Z}) are arranged substantially parallel to one another and, by means of the rotationally driven cutting tool (59), a roughening structure (43) is milled and/or cut into a wall region (39, 41), forming the end surface (23, 27) to be roughened, of the likewise rotationally driven component (5), **characterized in that** the end surface is a hardened end surface, and **in that** the component (5) is a gearwheel.

2. Method according to Claim 1, **characterized in that** the ratio between the rotational speed [rpm] of the cutting tool (59) and the circumferential speed [mm/min] of the rotationally symmetrical component (5) at a radial region (65) of the component (5) at which the axis of rotation (A_{W}) of the cutting tool (59) intersects the component (5) is greater than 1, preferably is greater than 2.

3. Method according to Claim 1 or 2, **characterized in that** the cutting tool (59) is rotated in a first direction of rotation, while the component (5) is rotated in a second direction of rotation, which is opposite to the first direction of rotation.

4. Method according to one of the preceding claims, **characterized in that** the roughening structure (43) is milled in and/or cut in by means of the cutting tool (59) substantially for a single revolution of the component (5).

5. Method according to one of the preceding claims, **characterized in that** a radius of the cutting tool (59), in particular a distance between the at least one cutting edge (61) of the cutting tool (59) and the tool axis of rotation (Aw), is a number of times larger than, in particular is more than three times as large as, the outer radius (R_{A}) of the end surface (23, 27) to be roughened.

6. Method according to one of the preceding claims, **characterized in that** the roughening structure (43) is cut into the component wall region (39, 41) with a defined cutting depth by means of the cutting tool, wherein provision is preferably made for the cutting depth to lie in a range from 0.02 mm to 0.05 mm.

7. Method according to one of the preceding claims, **characterized in that** the roughness depth of the roughened end surface (23, 27) lies in a range from 22 µm to 28 µm, in particular is approximately 25 µm.

8. Method according to one of the preceding claims, **characterized in that**, when seen in a plan view of the end surface (23, 27), the roughening structure (43) has arcuate and/or spiral-shaped cutting lines (45, 47) which extend from a radially inner end-surface boundary (49) to a radially outer end-surface boundary (51), wherein provision is preferably made for a first portion of the cutting lines (45) to run from the radially inner end-surface boundary (49) to the radially outer end-surface boundary (51) with rightward curvature and for a second portion of the cutting lines (47) to run from the radially inner end-surface boundary (49) to the radially outer end-surface boundary (51) with leftward curvature.

9. Method according to Claim 7, **characterized in that** the cutting lines of the first and/or the second portion of the cutting lines, in particular at the radially inner end-surface boundary (49), are spaced apart from one another in a circumferential direction by a defined distance, and/or the cutting lines of the first portion of the cutting lines (45) and of the second portion of cutting lines (47), in particular at the radially inner end-surface boundary (49), are arranged in an alternating manner in the circumferential direction.

10. Method according to one of the preceding claims, **characterized in that** the gearwheel (5) is formed by a spur gear, and/or **in that** the gearwheel (5) has multiple axially continuous cutouts (15), in particular bores, which are distributed in the circumferential direction and which open out into the at least one end surface (23, 27) to be roughened of the gearwheel (5).

11. Method according to one of the preceding claims, **characterized in that** the cutting tool (59) has a holding element (60), in particular a rotating head, on which at least one cutting element (63) is retained, in particular in a releasable manner, wherein provision is preferably made for the cutting element (63) to be formed by a cutting insert, in particular by an indexable cutting insert.

## Revendications

1. Procédé pour rendre rugueuse une surface de côté frontal d'une pièce essentiellement à symétrie de révolution,
dans lequel un premier dispositif de maintien et d'entraînement (55) est prévu, au moyen duquel la pièce (5) est maintenue de manière à être apte à tourner autour de son axe de symétrie central de pièce (A_{z}) et est entraînée en rotation à une vitesse de rotation définie,
dans lequel un deuxième dispositif de maintien et d'entraînement (57) est prévu, au moyen duquel un outil de coupe (59) est maintenu de manière à pouvoir tourner autour d'un axe de rotation d'outil (A_{w}) et est entraîné en rotation à une vitesse de rotation définie,
dans lequel l'outil de coupe (59) est agencé par rapport à la pièce (5) de telle sorte que l'axe de rotation (A_{w}) d'outil et l'axe de symétrie (A_{z}) de pièce sont agencés essentiellement parallèlement l'un à l'autre et qu'au moyen de l'outil de coupe (59) entraîné en rotation, une structure de rugosité (43) est entaillée et/ou fraisée dans une zone de paroi (39, 41), formant la face de côté frontal (23, 27) à rendre rugueuse de la pièce (5) également entraînée en rotation,
**caractérisé**
**en ce que** la face de côté frontal est une face de côté frontal trempée et en ce que la pièce (5) est une roue dentée.

2. Procédé selon la revendication 1, **caractérisé en ce que** le rapport entre la vitesse de rotation [tr/min] de l'outil de coupe (59) et la vitesse circonférentielle [mm/min] de la pièce (5) à symétrie de révolution est supérieur à un, de préférence supérieur à deux, au niveau d'une zone radiale (65) de la pièce (5) dans laquelle l'axe de rotation (A_{w}) de l'outil de coupe (59) coupe la pièce (5).

3. Procédé selon la revendication 1 ou la revendication 2, **caractérisé en ce que** l'outil de coupe (59) est entraîné en rotation dans un premier sens de rotation, tandis que la pièce (5) est entraînée en rotation dans un deuxième sens de rotation opposé au premier sens de rotation.

4. Procédé selon l'une des revendications précédentes, **caractérisé en ce que** la structure de rugosité (43) est entaillée et/ou fraisée sensiblement pour un seul tour de la pièce (5) au moyen de l'outil de coupe (59).

5. Procédé selon l'une des revendications précédentes, **caractérisé en ce qu'**un rayon de l'outil de coupe (59), en particulier une distance entre ladite au moins une arête de coupe (61) de l'outil de coupe (59) et l'axe de rotation (A_{w}) d'outil, est plusieurs fois plus grand, en particulier plus de trois fois plus grand, que le rayon extérieur (Rₐ) de la surface de côté frontal (23, 27) à rendre rugueuse.

6. Procédé selon l'une des revendications précédentes, **caractérisé en ce que** la structure de rugosité (43) est découpée avec une profondeur de coupe définie au moyen de l'outil de coupe dans la zone de paroi de pièce (39, 41) ; il est de préférence prévu que la profondeur de coupe se situe dans une gamme allant de 0,02 mm à 0,05 mm.

7. Procédé selon l'une des revendications précédentes, **caractérisé en ce que** la profondeur de rugosité de la surface de côté frontal (23, 27) rendue rugueuse se situe dans une gamme allant de 22 µm à 28 µm, en particulier est d'environ 25 µm.

8. Procédé selon l'une des revendications précédentes, **caractérisé en ce que** la structure de rugosité (43), vue de dessus sur la face de côté frontal (23, 27), présente des lignes de coupe (45, 47) en forme d'arc et/ou de spirale, qui s'étendent d'un bord (49) radialement intérieur de face de côté frontal à un bord (51) radialement extérieur de face de côté frontal ; il est de préférence prévu qu'une première partie des lignes de coupe (45) s'étend à partir du bord (49) radialement intérieur de la face de côté frontal en s'incurvant vers la droite en direction du bord (51) radialement extérieur de la face de côté frontal, et qu'une deuxième partie des lignes de coupe (47) s'étend à partir du bord (49) radialement intérieur de la face de côté frontal en s'incurvant vers la gauche en direction du bord (51) radialement extérieur de la face de côté frontal.

9. Procédé selon la revendication 7, **caractérisé en ce que** les lignes de coupe de la première et/ou de la deuxième partie de ligne de coupe, en particulier au niveau du bord (49) radialement intérieur de la face de côté frontal, sont espacées les unes des autres d'une distance définie dans la direction circonférentielle, et/ou les lignes de coupe de la première partie de ligne de coupe (45) et de la deuxième partie de ligne de coupe (47), en particulier au niveau du bord (49) radialement intérieur de la face de côté frontal, sont agencées en alternance dans la direction circonférentielle.

10. Procédé selon l'une des revendications précédentes, **caractérisé en ce que** la roue dentée (5) est formée par une roue droite et/ou **en ce que** la roue dentée (5) présente plusieurs évidements (15), en particulier des alésages, répartis dans la direction périphérique et traversant axialement la roue, qui débouchent dans ladite au moins une face de côté frontal (23, 27) à rendre rugueuse de la roue dentée (5).

11. Procédé selon l'une des revendications précédentes, **caractérisé en ce que** l'outil de coupe (59) présente un élément de maintien (60), en particulier une tête rotative, sur lequel au moins un élément de coupe (63) est maintenu, en particulier de manière amovible ; il est de préférence prévu que l'élément de coupe (63) est formé par une plaquette de coupe, en particulier par une plaquette de coupe réversible.
